Europäisches Patentamt

European Patent Office

Office européen des brevets

(19)

(11) EP 1 122 891 A1

(12) EUROPEAN PATENT APPLICATION

(43) Date of publication:
08.08.2001 Bulletin 2001/32

(51) Int Cl.⁷: H04B 7/005, H04L 1/00

(21) Application number: 00850018.3

(22) Date of filing: 31.01.2000

(84) Designated Contracting States:
AT BE CH CY DE DK ES FI FR GB GR IE IT LI LU
MC NL PT SE
Designated Extension States:
AL LT LV MK RO SI

(71) Applicant: TELEFONAKTIEBOLAGET LM
ERICSSON
126 25 Stockholm (SE)

(72) Inventors:
• Jäverbring, stefan
136 50 Haninge (SE)

• Martinez Arenas, Julia
174 50 Sundbyberg (SE)
• Edholm, Christer
113 20 Stockholm (SE)

(74) Representative: Sandström, Staffan Sven et al
Bergenstrahle & Lindvall AB,
P.O. Box 17704
118 93 Stockholm (SE)

(54) **Radio receiver and method therein**

(57) The invention is concerned with a method for deriving a desired signal from a received signal comprising the desired signal and unwanted signals. The desired signal is filtered from the received signal. In the method, a signal is received as a combination of the desired signal and unwanted signals. The received signal is filtered in parallel through different filters, e.g. different filters of a filter bank, and the radio channel is estimated individually for each filtered signal. The signal that is estimated to give the best performance is chosen and demodulated. The invention is also concerned with a receiver to carry out the method.

FIG.3

EP 1 122 891 A1

## Description

### TECHNICAL FIELD

The invention is concerned with a radio receiver for discrimination of a desired signal from a received signal by filtering. The invention is also concerned with a method in such a radio receiver.

### BACKGROUND ART

In radio communication, the information is sent by frequency, amplitude or phase modulating of a radio wave with a processed information signal. The received radio signal containing the information is then demodulated in a receiver to recreate the original information signal.

The functional components in a digital receiver contains e.g. an antenna through which the signal is received, frequency units to convert the radio frequency to a frequency suitable for processing, an analogue/digital A/D converter to digitize the received analogue signal by sampling and a demodulator to demodulate the signal and recreate the original information signal.

In cellular digital communication systems, several factors distorts the transmitted signal sent and the received signal is therefore a combination of the desired information signal, noise, co-channel interference and adjacent channel interference. Interference is also caused by the radio channel itself over which the radio signal is sent due to multi-path transmission, which introduce time dispersion, which may result in Inter Symbol Interference (ISI). Buildings, mountains and other hinders are reasons to the multi-path transmission of the signal, with a distorted signal as a result.

The digital information signal to be demodulated contains a sequence of symbols in a given order. These symbols may correspond to bits. A training sequence with known symbols can be used to estimate the channel.

The sampled received signal in base band can be expressed as

$$y(n) = h(n) + d(n) + \eta(n)$$

wherein $y(n)$ is the received signal, $d(n)$ is the desired information signal, $\eta(n)$ is noise and $h(n)$ is the channel.

With channel estimation, $h(n)$ can be estimated, for example when a training sequence, wherein $d(n)$ is known, is used. An example of a channel estimation method is the Least Square Method (LSM). The desired signal can then be derived from the received signal using algorithms for obtaining an estimate for the desired information signal. Examples of such algorithms are the MLSE algorithm and the RAKE receiver.

A receiver filter is applied in the receivers before demodulation, for filtering out as much as possible of the unwanted parts and not introduce too much ISI. Such a receiver filter can be analogue or digital depending on where it is positioned, i.e. in the analogue domain before the A/D converter or the digital domain after the A/D converter. Usually, the receiver filter is a combination of several filters, analog or digital.

To summarize, the filter will have several effects on the received signal in more or less extent, for example to reduce the amount of noise that enters the receiver, colour of the noise, affect the amount of Inter Symbol Interference (ISI), suppress adjacent interferers, etc.

The optimum filter depends on the spectrum of the wanted signal, the interference situation (noise, co-channel interference, and/or adjacent interference) and the channel. Furthermore, the demodulator's ability to handle ISI will influence the choice of receiver filter.

A narrow filter will reduce noise more than a wider filter, colour noise heavily, introduce much ISI, suppress adjacent interferers well, etc., while a wider filter will not reduce noise as much as a narrower filter, but colours noise less, introduces less ISI, and is less efficient at suppressing adjacent interferes.

For example, in situations, where there are mostly co-channel interferers and noise, a quite wide filter would be preferred, especially if the channel is very dispersive and the receiver hence is sensitive to extra ISI from the filter. On the other hand, if there are strong adjacent interferers present, a narrow filter would be preferred.

Typically, a single receive filter, which is a compromise between all these scenarios, is used.

It is also well known that it is possible to have a bank of filters which are suitable for different scenarios, and that the spectral characteristics of the received signal can be analyzed. Based on this analysis, a suitable filter is chosen.

An example of such a solution is presented in US Patent 5,396,657. The invention of this patent relates to an adjustable filter comprising means for analysing the received signal in the frequency domain which identifies the interference scenario from a predetermined set of interference scenarios and an adaptive filter responsive to a control signal produces by the means for analysing the received signal dependent on the type of the interference scenario detected.

A single filter is always a compromise between several aspects, and it would be desirable to benefit from different filters.

Having a bank of filters and choosing the filter to be used based on a frequency domain spectral analysis of the interference may not be sufficient, due to the complexity of the problem and the large number of effects of the filter. Furthermore, the filters in the bank will correspond to some specific cases, but a real situation will always be a mix of several scenarios.

The basic problem with this approach is that the known algorithms used in connection with filter banks try to identify the frequency domain interference situation and then estimate which filter that would give the best performance. It would, however, be important to base the choice of filter on more real situations taking also other aspects into consideration than the specific interference only as other aspects might in a certain situation be more important.

The object of the invention is therefore to develop a method with which the best filter can be chosen in every situation and which does not have the disadvantages of said prior art methods.

**SUMMARY OF THE INVENTION**

The method of the invention for deriving a desired signal from a received signal, comprising the desired signal and unwanted signals, is performed by filtering away the unwanted signals from the received signal. A signal is received as a combination of the desired signal and unwanted signals. The received signal is then filtered in parallell through the different filters. The channel is individually estimated for each filtered parallell signal. The signal that is estimated to give the best performance is chosen after which it is demodulated.

The different filters used are filters in a filter bank, wherein the filters can advantageously range from very wide (e.g. a Nyquist filter) to very narrow.

After the received signal has been filtered parallelly with the different filters in the filter bank, individual channel synchronization and channel estimation is followed. The synchronization and the channel estimation may for instance be performed using the training sequences in e.g. GSM (Global System of Mobile Communication) and EDGE (Enhanced Data Rates for Global Evolution).

Based on a channel estimation metric (e.g. estimated residual noise power or estimated Signal Noise Ratio (SNR) ) and well known techniques of comparing these metrics, the best filter is chosen, and the corresponding signal is demodulated and processed further to recreate the original information signal.

The demodulator may comprise an equalizer, rake receiver or similar elements known in themselves. It may also contain other functions, such as whitening filters, IRC (Interference Radio Combining) algorithms, prefilters etc.

Thus, the basic idea of the invention is to do parallell filterings, with receiver filters with different properties, and use the one which is estimated to give the best performance. The choice is based on individual channel estimations, where the branch giving the best channel estimation metric is chosen.

The selection procedure can be used for each burst (or slot) individually, or averaging can be utilized. In the latter case, the decision process includes an averaging process or low-pass filtering of the quality metrics for each branch filtering of functions of the quality metrics.

The proposed method improves the performance in different environments and situations. In a provided example two different filters are used (narrow and wide). In the example, where the method is used in EGPRS (Enhanced General Packet Radio Service), the gain is in the order of 2dB in the co-channel case or 4dB in the adjacent channel case, depending on what is the reference case. It should be noted that the channel is low dispersive (TU (Typical Urban) model,) and the gain is expected to be significantly larger in more dispersive cases (e.g. HT (Hilly Terrain) model).

Furthermore, the implementation requirements can be reduced, i.e. the implementation of the individual filters can be less accurate.

In comparison to other known methods on how to choose filters which are based on power and/or spectrum analysis before demodulation, this method is more general and robust. The known methods are more directly related to very specific scenarios.

**FIGURES**

Figure 1 is a general illustration of the invention
Figure 2 presents an example of how the channel estimation metric could be obtained in the invention.
Figure 3 is a general illustration of a first embodiment of the invention
Figure 4 is a general illustration of a second embodiment of the invention
Figure 5 is a general illustration of a third embodiment of the invention
Figure 6 is an example of how the filters can be chosen in the invention

**DETAILED DESCRIPTION**

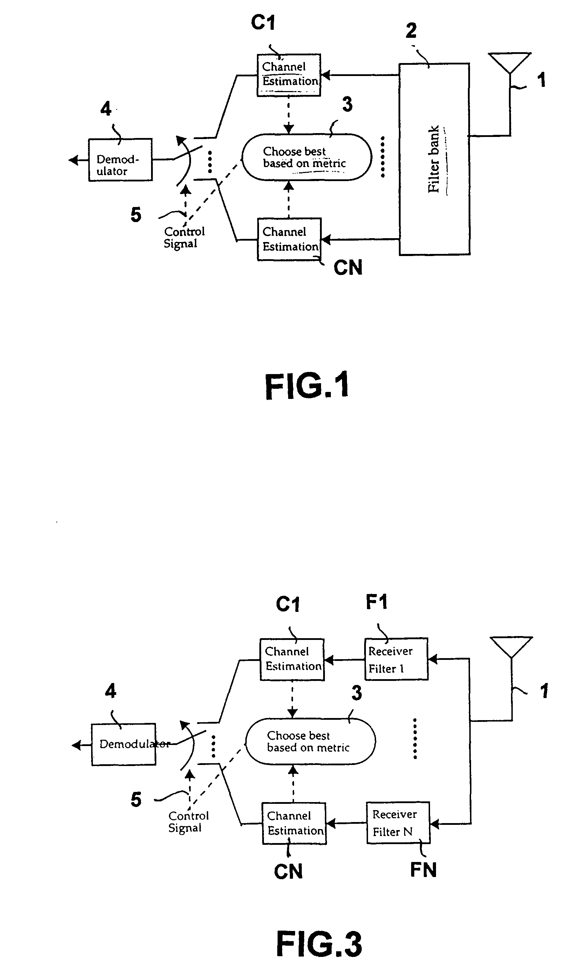

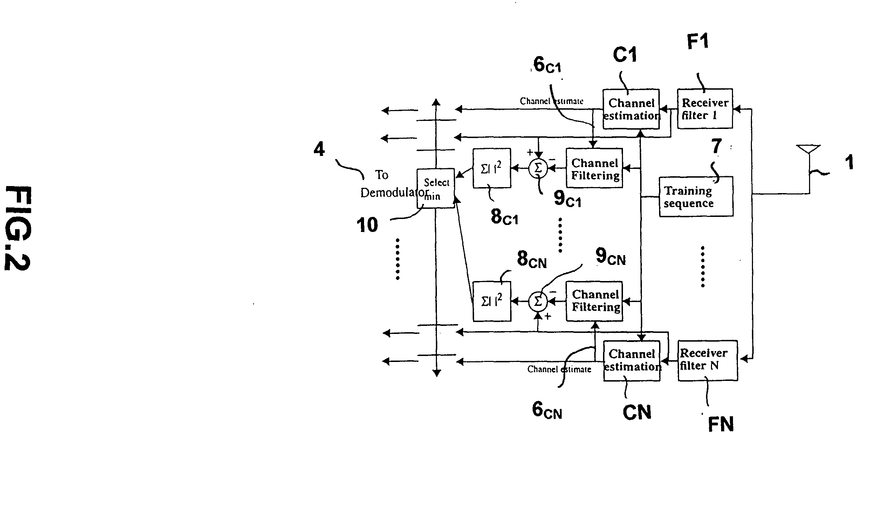

Figure 1 is a general illustration of the invention. A signal, which is a combination of the desired signal and noise and interference, is received through an antenna 1. The received signal is then filtered in parallell through the different filters in a filter bank 2. Each branch uses individual channel estimations C1....CN for the filtered signals. The signal that is estimated to give the best performance is chosen 3 by means of a control signal 5 after which is demodulated 4 to recreate the original information signal.

An example of how the channel estimation metrics can be obtained is given in figure 2, where the channel is estimated using a training sequence. As in figure 1, a signal, which is a combination of the desired signal and noise and interference, is received through an antenna 1. The received signal is then filtered in parallell through the different filters F1...FN in a filter bank. The radio channel is individually estimated C1....CN for each filtered signal.

Based on the channel estimation metric (e.g. estimated residual noise power) and well known techniques of comparing these metrics, the best filter is chosen 10, and the corresponding signal is demodulated 4 and processed further to recreate the original information signal.

In this example, the metric is the residual noise and is calculated by filtering $6_{C1}$, $6_{CN}$ the known training sequence 7 through each channel estimate, and thereby obtaining an estimate for each received sample that corresponds to the training sequence. The residual noise power can be calculated mathematically by comparing the estimated samples and the received samples e.g. by forming the normalized squared sum $8_{C1}$ - $8_{CN}$ of the differences $9_{C1}$ - $9_{CN}$ formed by subtracting the actual samples from the estimated samples. This can also be expressed as

$$\tilde{n} = \alpha \sum_{n=L}^{N-1} \left| \tilde{y}(n) - y(n) \right|^2 = \alpha \sum_{n=L}^{N-1} \left| \sum_{k=0}^{L} \tilde{h}(k) d(n-k) \right|^2$$

Where $\alpha$ could depend on the number of training symbols and the number of channel taps, $\tilde{n}$ is the residual noise power, y(n) are the received samples, $\tilde{y}(n)$ are the estimated samples, $\tilde{h}(k)$ are the estimated channel taps and $d(k)$ are the known training symbols, N is the number of training symbols and L is the channel memory (and $L + 1$ is the number of channel taps). For a Least Square (LS) estimate, $\alpha$ could be e.g. $1/(N - 2^{*}L+1)$.

Another example would be to estimate the SNR for each branch as channel estimation metric and choose the one with the highest estimated SNR, which approximately is

$$\frac{\sum_{n=0}^{L} \left| h(n) \right|^2}{\tilde{n}}$$

A first embodiment of the invention is presented in figure 3. As in figure 1, a signal, which is a combination of the desired signal and noise and interference, is received through an antenna 1. The received signal is then filtered in parallell through the different filters F1...FN in a filter bank. Each channel is individually estimated C1....CN for the filtered signals. The signal that is estimated to give the best performance is chosen 3 after which it is demodulated 4 to recreate the original information signal.

The receiver filters may be analogue or digital. They can also comprise several analogue and/or digital filters in series depending on implementation. The Receiver Filters F1 - FN for different branches may be constructed in different ways, according to the former sentence. However, the last analogue filter for a branch will also contain a sampling process as the channel estimation takes place in the digital domain.

If a branch contains digital filter(s), the digital signal may be downsampled in conjunction with some of the filterings. The downsampling may be different for the different filter components for a branch (if there are several filters in series). The downsampling process may also be done differently for different branches.

If the digital signal into the Channel Estimation for a branch is oversampled, the channel estimation may be fractionally spaced and then downsampled, i.e. the channel estimation can be improved by means of several samples per symbol. It may also be fractionally spaced without a succeeding downsampling.

The demodulator may be fractionally spaced, if the signal from the chosen branch is oversampled.

Different demodulations with regard to the sampling rate (i.e. how much fractionally spaced may be) can be used for different branches. As non-fractionally spaced demodulation can however be seen as a special case of a fractionally spaced demodulator and therefore only one demodulator, common for all branches is shown in the figures.

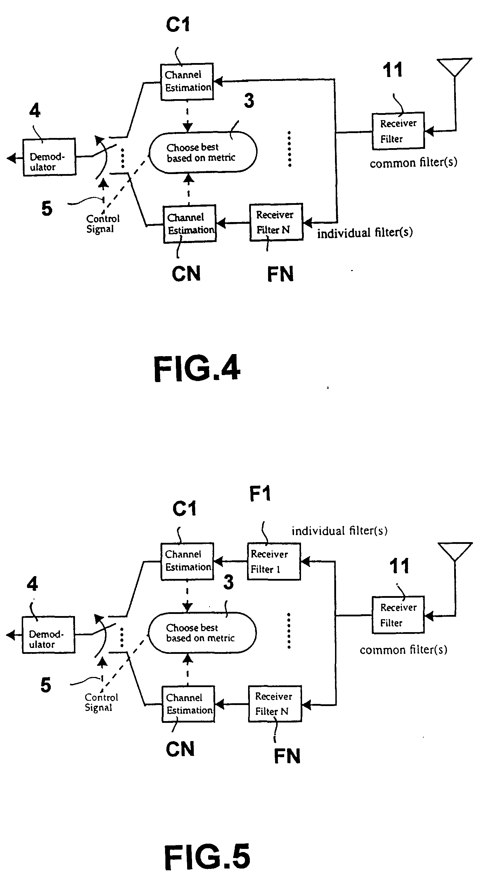

In a different implementation, which is shown in figure 5, the received signal can first be filtered with a wide filter 5 (for instance a Nyqvist filter). This common filter may actually be constructed as a combination of different filters with different properties, but is however represented by a single filter in this description.

In the next step, a bank of filters 2 is used parallelly on the signal and in an embodiment shown in figure 4, there is not used any extra filter in one branch, i.e. only the first filter is used, and in that branch the channel estimation is done directly after the first common filter. Individual channel estimations providing a quality metric for each branch, followed by a selection process is then used as described above in connection with figure 3.

In the same way as for figure 3, the components may vary with regard to if they are analogue/digital, oversampled/symbolsampled and symbol spaced/fractionally spaced. One advantage with this embodiment is that it is possible to put all analogue filters in the common filter part, and let digital filter characteristics per individual branch. This does not exclude having digital filters in the common part. Another advantage is that, if the common filter has the necessary characteristic, the sampling rate for the individual branches may be reduced.

When comparing the different embodiments in figures 4 and 5 with the embodiment of figure 3, the individual branch step filters in figure 3 compared to figures 4 and 5 could be chosen as the "delta filters" between the first wide filter and more narrow filters in the first embodiment. This means that the individual branch step filters in figures 4 and 5 could be chosen as "delta filters" so that they together with the first wide filter act as the filters in the first embodiment. If the filters are chosen in this way, the two embodiments will act very similarly, if not even exactly the same.

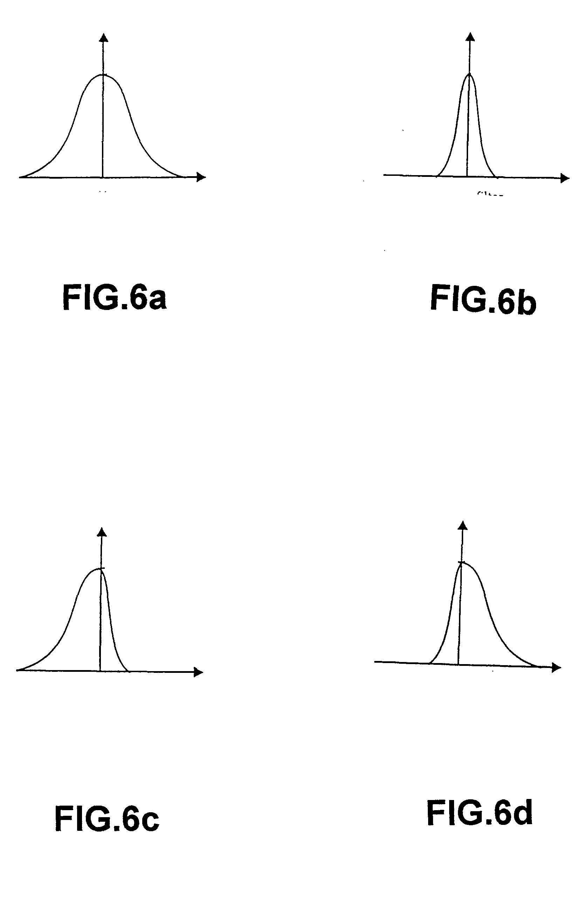

If the aim is to suppress adjacent interference, the filter bank could for instance contain one wide filter (for use without adjacent interferers), one narrow filter (for use with many adjacent interferers), one asymmetrical filter which is wide for lower frequencies and narrow for higher frequencies (for use with strong adjacent interferers on one carrier spacing up in frequency) and one asymmetrical filter, which is wide for higher frequencies and narrow for lower frequencies (for use with strong adjacent interferers on one carrier spacing below in frequency. This is shown in figures 6a - 6d. The X-axis represents the frequency and the Y-axis power.

Figure 6a shows the spectrum of a wide filter, which is suitable when there is no strong adjacent channel interference.

Figure 6b shows the spectrum of a narrow filter, which is suitable when there are strong adjacent channel interference on both sides.

Figure 6c shows the spectrum of an example of an asymmetric filter, which is suitable when there are strong adjacent channel interference on the right side.

Figure 6d shows the spectrum of an example of an asymmetric filter, which is suitable when there are strong adjacent channel interference on the left side.

## Claims

1. Method for deriving a desired signal from a received signal comprising the desired signal and unwanted signals, by filtering the desired signal from the received signal, comprising

   a) receiving a signal as a combination of the desired signal and unwanted signals,
   b) filtering the received signal in parallell through different filters,
   c) estimating the radio channel individually for each filtered signal,
   d) choosing the signal that is estimated to give the best performance, and
   e) demodulating the signal.

2. Method of claim 1, **characterized** in that in step b), the received signal is filtered through the different filters in a filter bank.

3. Method of claim 2, **characterized** in that an individual channel estimation is performed for each branch.

4. Method of any of claims 1 - 3, **characterized** in that in step c), the channel estimation is performed by using training sequences.

5. Method of any of claims 1 - 4, **characterized** in that in step d) the signal that is estimated to give the best performance is based on a channel estimation metric.

6. Method of claim 5, **characterized** in that the metric is residual noise power, whereby the smallest value is chosen.

7. Method of claim 6, **characterized** in that the residual noise power is estimated on a training sequence by filtering the known training sequence through the channel estimate thereby obtaining an estimate of the received samples that corresponds to the training sequence, calculating the residual noise as the difference between the normalized squared sum of the estimated samples minus the actual samples.

8. Method of claim 5, **characterized** in that the metric is Signal Noise Ratio (SNR), whereby the highest value is chosen.

9. Method of any of claims 1 - 8, **characterized** in that the method is used for each burst.

10. Method of any of claims 1 - 9, characterized in that the method is used by means of an averaging process.

11. Method of claim 10, **characterized** in that the averaging process is performed by low-pass filtering of the quality metrics for each branch, followed by burst by burst choices based on the filtered metrics.

12. Method of claim 10, **characterized** in that the averaging process is performed by filtering of functions of the quality metrics.

13. Method of any of claims 3 - 12, **characterized** in that the downsampling process is different for different branches.

14. Method of any of claims 3 - 12, **characterized** in that the downsampling process is different for the different filter components for a branch.

15. Method of any of claims 3 - 14, **characterized** in that the digital signal for a branch is oversampled, whereby the channel estimation is improved by several samples per symbol.

16. Method of any of claims 3 - 15, **characterized** in that different demodulation methods for the different branches is used with respect to the sampling rate.

17. Method of any of claims 3 - 16, **characterized** in that the received signal is filtered with a common filter before it is filtered with the filter bank.

18. Method of claim 17, **characterized** in that one of the channel estimations is performed directly after the common filter.

19. Method of any of claims 3 - 18, **characterized** in that the method is used to suppress adjacent interference, whereby the filter bank contains

   one wide filter for use without adjacent interference,
   one narrow filter for use with strong interferers on both sides,
   one asymmetrical filter, which is wide for lower frequencies and narrow for higher frequencies,
   and one asymmetrical filter, which is wide for higher frequencies and narrow for lower frequencies.

20. Receiver for deriving a desired signal from a received signal comprising the desired signal and an unwanted signal, by filtering the desired signal from the received signal, comprising

   a) an antenna for receiving a signal as a combination of the desired signal and unwanted signals,
   b) different filters for filtering the received signal in parallell,
   c) means for estimating the radio channel individually for each filtered signal,
   d) means for choosing the signal that gives the best channel estimate, and
   e) a demodulator for demodulating the signal.

21. Receiver of claim 20, **characterized** in that the different filters are filters in a filter bank.

22. Receiver of claim 20 or 21, **characterized** in that the receiver filters are given combinations of analog and digital filters.

C1

2

Channel
Estimation

Filter bank

1

4

3

Demod-
ulator

Choose best
based on metric

5

Control
Signal

Channel
Estimation

CN

## FIG.1

C1

F1

Channel
Estimation

Receiver
Filter 1

1

4

3

Demodulator

Choose best
based on metric

5

Control
Signal

Channel
Estimation

Receiver
Filter N

CN

FN

## FIG.3

FIG.2

EP 1 122 891 A1

**FIG.4**

**FIG.5**

FIG.6a

FIG.6b

FIG.6c

FIG.6d

**European Patent Office**

## EUROPEAN SEARCH REPORT

Application Number

EP 00 85 0018

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 715 282 A (BONTRAGER RICHARD ET AL) 3 February 1998 (1998-02-03)<br><br>* column 1, line 35 – column 2, line 14 *<br>* column 2, line 54-62 *<br>* column 3, line 24 – column 4, line 36 *<br>* figures 1,2 *<br>--- | 1-5, 9-12, 17-22 | H04B7/005<br>H04L1/00 |
| Y | US 5 465 410 A (HIBEN BRADLEY M ET AL) 7 November 1995 (1995-11-07)<br><br>* column 2, line 9-67 *<br>* column 4, line 3 – column 5, line 22 *<br>* figures 1-4 *<br>--- | 1-5, 9-12, 17-22 | |
| A | EP 0 715 417 A (NIPPON ELECTRIC CO) 5 June 1996 (1996-06-05)<br>* column 2, line 3-49 *<br>* column 4, line 9-32 *<br>* column 5, line 29-40 *<br>* figures 1-5 *<br>----- | 1,2,20, 21 | |
| | | | TECHNICAL FIELDS SEARCHED (Int.Cl.7)<br><br>H04B<br>H04L |

The present search report has been drawn up for all claims

| Place of search | Date of completion of the search | Examiner |
|---|---|---|
| THE HAGUE | 7 July 2000 | Yang, Y |

EPO FORM 1503 03.82 (P04C01)

**ANNEX TO THE EUROPEAN SEARCH REPORT
ON EUROPEAN PATENT APPLICATION NO.**

EP 00 85 0018

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2000

| Patent document cited in search report | | Publication date | Patent family member(s) | | Publication date |
|---|---|---|---|---|---|
| US 5715282 | A | 03-02-1998 | CA<br>EP<br>WO | 2253415 A<br>0920733 A<br>9742721 A | 13-11-1997<br>09-06-1999<br>13-11-1997 |
| US 5465410 | A | 07-11-1995 | NONE | | |
| EP 0715417 | A | 05-06-1996 | JP<br>AU<br>AU<br>CA<br>US | 8154062 A<br>695017 B<br>3911295 A<br>2163952 A<br>5758296 A | 11-06-1996<br>06-08-1998<br>06-06-1996<br>29-05-1996<br>26-05-1998 |

EPO FORM P0459

For more details about this annex : see Official Journal of the European Patent Office, No. 12/82